# EUROPEAN PATENT APPLICATION

(11) **EP 4 447 403 A1**
(43) Date of publication of application: **16.10.2024**
(21) Application number: 23167906.9
(22) Date of filing: 14.04.2023
(51) Int. Cl.: H04L 47/24, H04L 47/263, H04L 47/25

(54) **A RELIABLE LOW LATENCY AND LOW JITTER COMMUNICATION CONNECTION**

(71) Applicant: Deutsche Telekom AG, 53113 Bonn (DE)
(72) Inventor: SCHNIEDERS, Dominik, 52078 Aachen (DE)
(74) Representative: RDL Patentanwälte PartG mbB

(57) **Abstract**

A method for operating a communication network, wherein a sender of the distributed real-time application transmits a data stream at a data rate to a receiver of the distributed real-time application via a connection provided by a communication network, a distributed real-time application, a scheduler for a communication network and a computer program product.

## Description

The invention relates to a method for operating a communication network, wherein a sender of the distributed real-time application transmits a data stream at a data rate to a receiver of the distributed real-time application via a connection provided by a communication network. The invention further relates to a distributed real-time application, a scheduler for a communication network and a computer program product.

A distributed real-time application comprises an application frontend and an application backend. The application frontend and the application backend are configured for transmitting the data stream, i.e. application data, via the communication network. Both the application frontend and the application backend may be the sender or the receiver. The data stream is usually periodically transmitted as a plurality of data packets, packets in short. Distributed real-time applications may be also referred to as near-real-time-applications, time-critical applications or latency-critical applications.

Each distributed real-time application suffers from and may even fail due to a high latency and/or a high jitter, i.e., variability of the latency, of the communication connection, connection in short. The latency of the communication connection is essentially caused by a queue time, i.e., a time interval required for IP, Internet Protocol, packets to pass through a queue provided by a scheduler of the communication network providing the connection.

Obviously, a congestion of the queue increases the latency of the connection. A timely variation of the congestion, accordingly, results in a jitter of the latency.

In 5G cellular networks, L4S, Low Loss, Low Latency and Scalable Throughput, L4S in short, as specified in RFC, Request For Comments, 9330, 9331 and 9332 allows for providing a distributed real-time application with a low latency connection. L4S relies on the scheduler providing a congestion feedback to the distributed real-time application and the distributed real-time application adapting a data rate of the transmitted data stream dependent on the provided congestion feedback.

However, the latency of the connection can still have latency peaks resulting in a jitter when using L4S. Particularly, a long RTT, Round Trip Time, of the connection results in a dead time preventing the distributed real-time application from immediately adapting the data rate of the transmitted data stream.

It is, therefore, an object of the invention to suggest a method for operating a communication network which reliably provides a distributed real-time application with a low latency and low jitter connection. Further objects of the invention are to provide a distributed real-time application, a scheduler for a communication network and a computer program product.

One aspect of the invention is a method for operating a communication network, wherein a sender of the distributed real-time application transmits a data stream at a data rate to a receiver of the distributed real-time application via a connection provided by the communication network. Each of an application frontend of the distributed real-time application and an application backend of the distributed real-time application may be the sender or the receiver. A stationary server may execute the application backend. A terminal device may execute the application frontend. Both the stationary server and the terminal device are connected to the communication network. The distributed real-time application requires a low latency and a low jitter of the connection for a proper operation.

According to the invention, a scheduler of the communication network allocates spectral resources of the communication network for the data stream according to a high rank priority assigned to the data stream by the communication network and marks packets of the data stream dependent on a difference of the allocated spectral resources from spectral resources allowed for the data stream, and the receiver of the distributed real-time application checks the data stream for marked packets and causes the sender to gradually reduce the data rate of the data stream as long as the data stream comprises marked packets. The high rank priority ensures a low latency and a low jitter of the connection as the scheduler primarily extracts the packets of the data stream from a queue and, thus, prevents the queue from congesting. The rank of the priority is chosen high enough for guaranteeing the primary extraction of the packets of the data stream. The gradual reduction allows the distributed real-time application for a smooth variation of the data rate.

On the other hand, the scheduler keeps track of the spectral resources allocated to the data stream and prevents the connection from an unduly predominant allocation spectral resources. By marking the packets the scheduler provides the distributed real-time application with a feedback concerning the spectral resources currently used as compared to an appropriate, i.e. allowed, usage of spectral resources. In response to the feedback the distributed real-time application adapts the data rate in order to reduce the usage of spectral resources to an appropriate amount.

It is noted that the queue is generally short when carrying out the inventive method. Thus, carrying out the known L4S method and the inventive method simultaneously is not beneficial. In other words, there is no use in combining the L4S method and the inventive method to be carried out concurrently.

The scheduler preferably marks a percentage of the packets, the percentage being a value of a function of the difference. Values of the function are in a range from 0%, i.e. no packet is marked, to 100%, each packet is marked. The function defines a first domain of an appropriate usage of spectral resources, the function being evaluated to 0% in the first domain, and a second domain of an inappropriate usage of spectral resources, the function being evaluated to 100% in the second domain.

The function may define a third domain, i.e. transitional domain, in between the first domain and the second domain and connecting the first domain and the second domain, the function being evaluated to values above 0% and below 100% in the third domain.

A step function defining a threshold value, a linear function or a non-linear function may be evaluated as the function. The step function has no third domain and immediately jumps from 0% to 100% at the threshold value. The linear function and the non-linear function each have third domain defined by a lower threshold and an upper threshold. The value of the linear function smoothly increases from 0% to 100% at a constant slope in the third domain. The value of the linear function also smoothly increases from 0% to 100% in the third region, but at a varying slope. The varying slope allows for controlling an adaptation of the distributed real-time application in a greater detail.

Advantageously, marking a packet comprises setting an ECN, Explicit Congestion Notification, bit of an IP, Internet Protocol, header of the packet. The ECN bit is used differently from L4S as the ECN bit does not indicate a congestion of the queue but an inappropriate usage of spectral resources. Rededicating the ECN bit is possible as L4S is not concurrently applicable (see above).

In an embodiment, gradually reducing comprises smoothly reducing during a grace time, the grace time being in a range from some 100 milliseconds to few seconds. The grace time is a time interval an adaptation of the data rate is expected. The indicated range does not require the data rate to be adapted suddenly.

The rank of the priority may be lowered and the allocated spectral resources are reduced correspondingly or an L4S, Low Latency, Low Loss and Scalable throughput, method may be applied to the data stream when the allocated spectral resources exceed the allowed spectral resources after the grace time. Only after the grace time, the scheduler takes a measure for reducing the spectral resources allocated to the connection. The distributed real-time application is so to speak punished for not adapting the data rate fast enough. The punishment prevents the distributed real-time application from misusing spectral resources of the communication network. The punishment comprises either assigning a lower rank to the data stream resulting in fewer spectral resources allocated to the connection or completely revoking the priority assigned to the data stream and switching to the L4S method instead. The latter measure is useful as the L4S method or a similar queue length feedback method and the inventive method are not concurrently carried out.

The spectral resources may be allocated dependent on the data rate, a signal quality of the connection and/or a load of the communication network. Of course, the allocation of the spectral resources does not depend on the rank of priority only. Rather depends the allocation on the data rate of the data stream, the signal quality of the connection or the load of the communication network, e.g., caused by data streams simultaneously transmitted by further distributed applications. Each of an increasing data rate of the data stream, a worsening signal quality of the connection, e.g., a decreasing SINR, Signal and Interference to Noise Ratio, and an increasing spectral demand of concurrent distributed applications requires more spectral resources to be allocated to the connection in order to meet the high rank of priority.

In an embodiment, the priority is assigned as an absolute priority, a delay-based priority or a relative priority. The scheduler may dynamically change the delay-based priority and the relative priority, respectively, in order to ensure a primary extraction of the packets of the data stream from the queue.

Preferably, a terminal device and an edge cloud server execute the sender and the receiver, respectively, or vice versa and/or a RAN, Radio Access Network, as the communication network provides a wireless connection as the connection. The terminal device may comprise a mobile device, e.g. UE, User Equipment, like a smartphone or a tablet. The edge cloud server is located close to a BTS, Base Transceiver Station, of the RAN allowing for a short RTT. The BTS may execute the scheduler. The spectral resources may be allocated as PRBs, Physical Resource Blocks.

A 5G cellular network may provide the wireless connection and the data stream may be transmitted as a 5G flow. The 5G flow is a UPF, User Plane Function, of the 5G cellular network for transmitting data from a sender to a receiver.

The connection is advantageously provided as a Non-GBR, Guaranteed Bit Rate, bearer of the communication network. In other words, the connection does not intrinsically guarantee a minimum bit rate for the transmitted data stream. The data rate of the data stream is only met by assigning the high rank of priority.

In an embodiment, the allowed spectral resources are determined according to a fair distribution of spectral resources among a plurality of distributed applications or equal to spectral resources predetermined for the distributed real-time application. The scheduler may apply different criteria for determining the spectral resources to be allocated to the connection. A first criterion is based on the fair distribution of spectral resources. The fair distribution avoids the spectral resources being allocated to the connection at the expense of concurrent distributed applications. A second criterion relies on an absolute determination in advance, e.g., resulting from a subscription.

Another object of the invention is a distributed real-time application, comprising a sender and a receiver. The sender and the receiver comprise a computing device configured for execution a frontend of the distributed real-time application and a backend of the distributed real-time application, respectively.

According to the invention, the distributed real-time application is configured for carrying out a method according to an embodiment of the invention cooperating with a scheduler of a communication network. The distributed real-time application particularly is able to check a transmitted data stream for marked packets of the data stream and to adapt a data rate of the data stream corresponding to marked packets found in the data stream.

A third object of the invention is a scheduler for a communication network. The scheduler comprises a computing device configured for executing the scheduler.

According to the invention, the scheduler is configured for carrying out a method according to an embodiment of the invention cooperating with a distributed real-time application. The scheduler particularly is able to compare spectral resources allocated to a connection with allowed spectral resources allowed for the connection and mark packets of a data stream transmitted via the connection dependent on a difference of the allocated spectral resources from the allowed spectral resources.

A fourth object of the invention is a computer program product, comprising a digital storage medium storing a program code. The digital storage medium may comprise a CD, Compact Disk, a DVD, Digital Versatile Disk, a RAM, Random Access Memory, chip, a USB, Universal Serial Bus, stick, a HD, Hard Disk, a cloud storage and the like.

According to the invention, the program code causes a computing device to carry out a method according to an embodiment of the invention as a scheduler of a communication network when being executed by a processor of the computing device. The scheduler allows the communication network for reliably supporting a distributed real-time application requiring a low latency and low jitter connection.

It is an essential advantage of the inventive method that it reliably provides a distributed real-time application with a low latency and low jitter connection. Apart from that, it can be implemented independent of a GBR feature of the connection.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

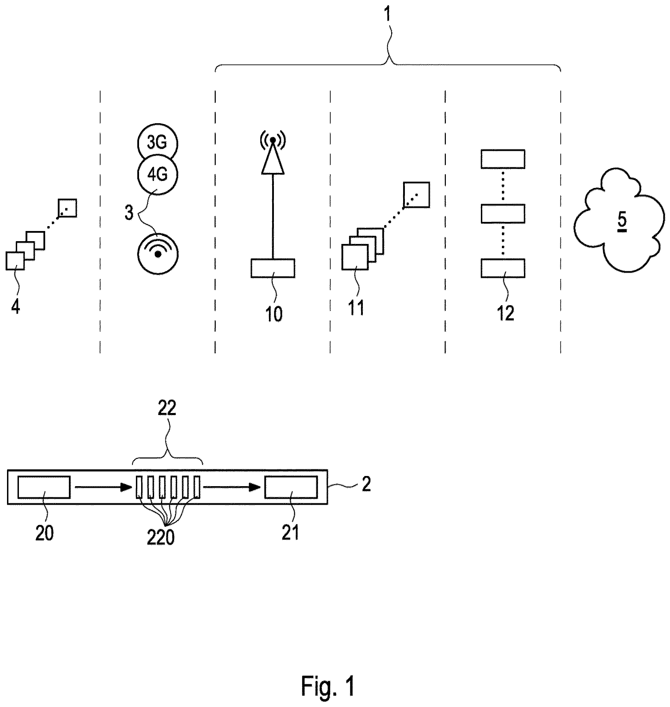

- Fig. 1: schematically shows an entity diagram of a communication network being operated in a method according to an embodiment of the invention.

Fig. 1 schematically shows an entity diagram of a communication network 1 being operated in a method according to an embodiment of the invention. The communication network 1 comprises a scheduler 10 according to an embodiment of the invention.

The scheduler 10 is appropriate for the communication network 1 and configured for carrying out a method according to an embodiment of the invention cooperating with a distributed real-time application 2 according to the invention (see below). The scheduler 10 may be implemented by means of a computer program product. The computer program product comprises a digital storage medium storing a program code.

The program code causes a computing device to carry out the inventive method as the scheduler 10 of the communication network 1 in cooperation with the distributed real-time application 2 when being executed by a processor of the computing device.

The communication network 1 may further comprise an edge cloud server 11 and a backbone 12. The communication network 1 may be connected to an internet 5. The communication network 1 is configured for providing a terminal device 4 with a communication connection 3. For instance, a RAN, Radio Access Network, as the communication network 1 provides a wireless connection as the connection 3.

The terminal device 4 and the edge cloud server 11 may be configured for executing the distributed real-time application 2. The distributed real-time application 2 comprises a sender 20 and a receiver 21 and is configured for carrying out the following method cooperating with the scheduler 10 of the communication network 1.

By way of example, a mobile device as the terminal device 4 executes an application frontend of the distributed real-time application 2 as one of the sender 20 of the distributed real-time application 2 and the receiver 21 of the distributed real-time application 2. The edge cloud server 11 may execute an application backend of the distributed real-time application 2 as the other one of the sender 20 and the receiver 21.

According to an embodiment of the invention, the communication network 1 is operated as follows.

The terminal device 4 and the edge cloud server 11 may execute the sender 20 and the receiver 21 of the distributed real-time application 2, respectively, or vice versa.

The sender 20 of the distributed real-time application 2 transmits a data stream 22 at a data rate to a receiver 21 of the distributed real-time application 2 via a connection 3 provided by a communication network 1. Particularly, a 5G cellular network provides the wireless connection and the data stream 22 is transmitted as a 5G flow. The connection 3 may be provided as a Non-GBR, Guaranteed Bit Rate, bearer of the communication network 1.

The scheduler 10 of the communication network 1 allocates spectral resources of the communication network 1 for the data stream 22 according to a high rank priority assigned to the data stream 22 by the communication network 1. The spectral resources may be allocated dependent on the data rate, a signal quality of the connection 3 and/or a load of the communication network 1.The priority is exemplarily assigned as an absolute priority, a delay-based priority or a relative priority.

The scheduler 10 marks packets 220 of the data stream 22 dependent on a difference of the allocated spectral resources from spectral resources allowed for the data stream 22. Marking a packet 220 may comprise setting an ECN, Explicit Congestion Notification, bit of an IP, Internet Protocol, header of the packet 220.

The scheduler 10 preferably marks a percentage of the packets 220, the percentage being a value of a function of the difference. A step function defining a threshold value, a linear function or a non-linear function may be evaluated as the function.

The allowed spectral resources is exemplarily determined according to a fair distribution of spectral resources among a plurality of distributed applications or equal to spectral resources predetermined for the distributed real-time application 2.

The receiver 21 of the distributed real-time application 2 checks the data stream 22 for marked packets 220 and causes the sender 20 to gradually reduce the data rate of the data stream 22 as long as the data stream 22 comprises marked packets 220. Gradually reducing may comprise smoothly reducing during a grace time, the grace time being in a range from some 100 milliseconds to few seconds.

When the allocated spectral resources exceed the allowed spectral resources after the grace time, the rank of the priority may be lowered and the allocated spectral resources may be reduced correspondingly. Alternatively an L4S, Low Latency, Low Loss and Scalable throughput, method may be applied to the data stream 22.

### Reference numerals

- 1: communication network
- 10: scheduler
- 11: edge cloud server
- 12: backbone
- 2: distributed real-time application
- 20: sender
- 21: receiver
- 22: data stream
- 220: packet
- 3: connection
- 4: terminal device
- 5: internet

## Claims

1. A method for operating a communication network (1), wherein
- a sender (20) of the distributed real-time application (2) transmits a data stream (22) at a data rate to a receiver (21) of the distributed real-time application (2) via a connection (3) provided by a communication network (1);
- a scheduler (10) of the communication network (1) allocates spectral resources of the communication network (1) for the data stream (22) according to a high rank priority assigned to the data stream (22) by the communication network (1);
- the scheduler (10) marks packets (220) of the data stream (22) dependent on a difference of the allocated spectral resources from spectral resources allowed for the data stream (22);
- the receiver (21) of the distributed real-time application (2) checks the data stream (22) for marked packets (220) and causes the sender (20) to gradually reduce the data rate of the data stream (22) as long as the data stream (22) comprises marked packets (220).

2. The method according to claim 1, wherein the scheduler (10) marks a percentage of the packets (220), the percentage being a value of a function of the difference.

3. The method according to claim 2, wherein a step function defining a threshold value, a linear function or a non-linear function is evaluated as the function.

4. The method according to one of claims 1 to 3, wherein marking a packet (220) comprises setting an ECN, Explicit Congestion Notification, bit of an IP, Internet Protocol, header of the packet (220).

5. The method according to one of claims 1 to 4, wherein gradually reducing comprises smoothly reducing during a grace time, the grace time being in a range from some 100 milliseconds to few seconds.

6. The method according to 5, wherein the rank of the priority is lowered and the allocated spectral resources are reduced correspondingly or an L4S, Low Latency, Low Loss and Scalable throughput, method is applied to the data stream (22) when the allocated spectral resources exceed the allowed spectral resources after the grace time.

7. The method according to one of claims 1 to 6, wherein the spectral resources are allocated dependent on the data rate, a signal quality of the connection (3) and/or a load of the communication network (1).

8. The method according to one of claims 1 to 7, wherein the priority is assigned as an absolute priority, a delay-based priority or a relative priority.

9. The method according to one of claims 1 to 8, wherein a terminal device (4) and an edge cloud server (11) execute the sender (20) and the receiver (21), respectively, or vice versa and/or a RAN, Radio Access Network, as the communication network (1) provides a wireless connection as the connection (3).

10. The method according to claim 9, wherein a 5G cellular network provides the wireless connection and the data stream (22) is transmitted as a 5G flow.

11. The method according to one of claims 9 or 10, wherein the connection (3) is provided as a Non-GBR, Guaranteed Bit Rate, bearer of the communication network (1).

12. The method according to one of claims 1 to 11, wherein the allowed spectral resources are determined according to a fair distribution of spectral resources among a plurality of distributed applications or equal to spectral resources predetermined for the distributed real-time application (2).

13. A distributed real-time application (2), comprising a sender (20) and a receiver (21) and being configured for carrying out a method according to one of claims 1 to 12 cooperating with a scheduler (10) of a communication network (1).

14. A scheduler (10) for a communication network (1), being configured for carrying out a method according to one of claims 1 to 12 cooperating with a distributed real-time application (2).

15. A computer program product, comprising a digital storage medium storing a program code, the program code causing a computing device to carry out a method according to one of claims 1 to 12 as a scheduler (10) of a communication network (1) when being executed by a processor of the computing device.
